# EUROPEAN PATENT APPLICATION

(11) **EP 2 960 464 A1**
(43) Date of publication of application: **30.12.2015**
(21) Application number: 13875928.7
(22) Date of filing: 21.02.2013
(51) Int. Cl.: F02B 39/00, F01M 13/00, F02B 37/00, F02B 39/16

(54) **COOLING DEVICE OF SUPERCHARGER OF INTERNAL COMBUSTION ENGINE COMPRISING BLOW-BY GAS CIRCULATION DEVICE**

(71) Applicant: TOYOTA JIDOSHA KABUSHIKI KAISHA, Toyota-shi, Aichi-ken, 471-8571 (JP)
(72) Inventor: SUGIYAMA, Satoshi, Toyota-shi Aichi 471-8571 (JP); KATO, Kichiro, Toyota-shi Aichi 471-8571 (JP); YOEDA, Keiji, Toyota-shi Aichi 471-8571 (JP); SUGIYAMA, Matsuyoshi, Toyota-shi Aichi 471-8571 (JP); MATSUMOTO, Isao, Toyota-shi Aichi 471-8571 (JP); YAMANE, Naruto, Toyota-shi Aichi 471-8571 (JP)
(74) Representative: Smith, Samuel Leonard
(86) International application number: PCT/JP2013/054315
(87) International publication number: WO 2014/128877

(57) **Abstract**

The object of the invention is to suppress the generation or accumulation of deposits in a compressor of a turbocharger of an engine provided with a blowby gas recirculation device. The invention relates to a cooling device for the turbocharger (60) of the engine (10) provided with the blowby gas recirculation device (50). The cooling device has a cooled air introduction passage (70). The blowby gas recirculation device introduces a blowby gas to an area upstream of the compressor. The cooled air introduction passage introduces a cooled air to a diffuser passage (64) of the compressor. The cooled air introduction passage introduces the cooled air to the diffuser passage in a direction having an acute angle with respect to a flow direction (IA) of the intake air flowing through the diffuser passage.

## Description

### Technical field

The invention relates to a cooling device for a turbocharger of an internal combustion engine provided with a blowby gas recirculation device.

### Background art

In the Patent literature 1, a system is described for performing a ventilation of a crank case by recirculating, to an intake passage, a blowby gas which leaks from combustion chambers of an internal combustion engine (hereinafter, will be referred to as "engine") into the crank case.
This system is also called as a blowby gas recirculation device or a PCV (a positive crank case ventilation).

### Cited list

### Patent literature

Patent literature 1 : JP 2007-187033 A
Patent literature 2 : JP 8-14056 A

### SUMMARY OF INVENTION

### Problem to be solved

An oil may be spattered in the crank case due to rotation of a crank shaft at a high speed and blowoff of an in-cylinder gas from between a piston ring and an inner peripheral wall surface defining a cylinder bore and the like. As a result, an oil mist (that is, liquid particles of lubrication oil) is generated in the crank case, in case that the engine has a turbocharger, when the oil mist is recirculated to the intake passage together with the blowby gas by the blowby gas recirculation device, the oil mist flows into a compressor of the turbocharger. On the other hand, a temperature of an intake air discharged from an impeller of the compressor increases to a high temperature by a compression of the compressor. Therefore, the oil mist discharged from the impeller is subject to the high temperature. As a result, deposits are generated from the oil mist and accumulate on a diffuser wall surface of the compressor. Such an accumulation of the deposits reduces a supercharging efficient of the turbocharger.

Accordingly, the object of the invention is to suppress the generation or the accumulation of the deposits in the compressor.

### Means for solving the problem

The invention relates to a cooling device for a turbocharger of an internal combustion engine provided with a blowby gas recirculation device. The cooling device according to the invention comprises low temperature gas introduction means. According to the invention, the blowby gas recirculation device is configured to introduce a blowby gas to an area upstream of a compressor of the turbocharger. Further, the low temperature gas introduction means is configured to introduce a low temperature gas to a diffuser passage of the compressor. Furthermore, the temperature of the low temperature gas is lower than the temperature of an intake gas discharged from an impeller of the compressor into the diffuser passage. Further, the low temperature gas introduction means is configured to introduce the low temperature gas to the diffuser passage in a direction having an acute angle with respect to a flow direction of the intake air flowing through the diffuser passage.

According to the invention, the low temperature is introduced to the diffuser passage. Therefore, the intake air discharged from the impeller of the compressor is cooled by the low temperature gas. Thereby, the oil mist included in the intake air can be prevented from being subject to the high temperature. Thus, the generation of the deposits from the oil mist included in the intake air can be suppressed.

In addition, according to the invention, the low temperature gas is introduced to the diffuser passage in the direction having the acute angle with respect to the flow direction of the intake air flowing through the diffuser passage. Therefore, a layer of the low temperature gas is formed between the intake air discharged from the impeller and the diffuser wall surface. Thereby, an amount of heat which the intake air receives from the diffuser wall surface can be reduced. Therefore, the increasing of the temperature of the intake air discharged from the impeller can be suppressed. Thus, the generation of the deposits from the oil mist included in the intake air can be suppressed.

In addition, according to the invention, the layer of the low temperature gas is formed between the intake air and the diffuser wall surface. Therefore, even when the deposits are generated from the oil mist included in the intake air, the accumulation of the deposits on the diffuser wall surface can be suppressed by the layer of the low temperature gas.

Further, according to the invention, when the low temperature gas introduction means has a low temperature gas introduction passage, it is preferred that the low temperature gas introduction passage opens to the diffuser passage at the diffuser wall surface defining the diffuser passage and extends at an area adjacent to the diffuser wall surface in a direction having an acute angle with respect to the flow direction of the intake air flowing through the diffuser passage.

In this case, the low temperature gas introduction passage extends at an area adjacent to the diffuser wall surface in the direction having the acute angle with respect to the flow direction of the intake air flowing through the diffuser passage. Thus, the layer of the low temperature gas can be formed between the intake air and the diffuser wall surface with a simple configuration.

Further, according to the invention, it is preferred that the low temperature gas introduction means is configured to introduce the low temperature gas to the diffuser passage from a position adjacent to an area where the intake air is discharged from the impeller of the compressor.

In this case, the layer of the low temperature gas can be formed over a large area of the diffuser wall surface. Thus, the effect of suppressing the increasing of the temperature of the intake air discharged from the impeller can be improved.

Further, according to the invention, it is preferred that the low temperature gas introduction means is configured to introduce, to the diffuser passage, the intake air cooled by an intercooler.

In this case, the low temperature gas can be obtained with a simple configuration.

### BRIEF DESCRIPTION OF THE DRAWINGS

FIG. 1 is a view illustrating a first embodiment of an internal combustion engine provided with a blowby gas recirculation device.
FIG. 2 is a view illustrating a compressor of a turbocharger of the engine according to the first embodiment.
FIG. 3 is a view illustrating a second embodiment of the engine.
FIG. 4 is a view illustrating a flowchart for controlling a flow rate control valve according to the second embodiment.
FIG. 5 is a view illustrating a third embodiment of the engine.
FIG. 6 is a view illustrating a flowchart for controlling the flow rate control valve according to the third embodiment.

### MODE FOR CARRYING OUT THE INVENTION

Below, embodiments according to the invention will be described with reference to the drawings. An internal combustion engine described below is a piston-reciprocating type of a compression self-ignition internal combustion engine (so-called diesel engine). However, the invention can be applied to the other type of the internal combustion engine. Note that the term "deposits" in the following description means deposits derived from an oil mist included in an intake air.

### <First Embodiment>

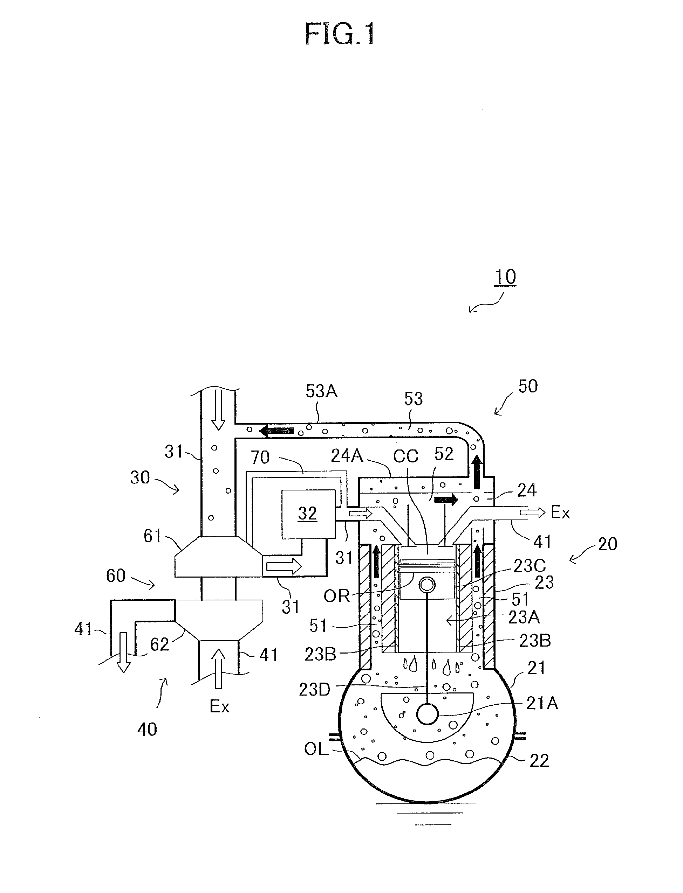

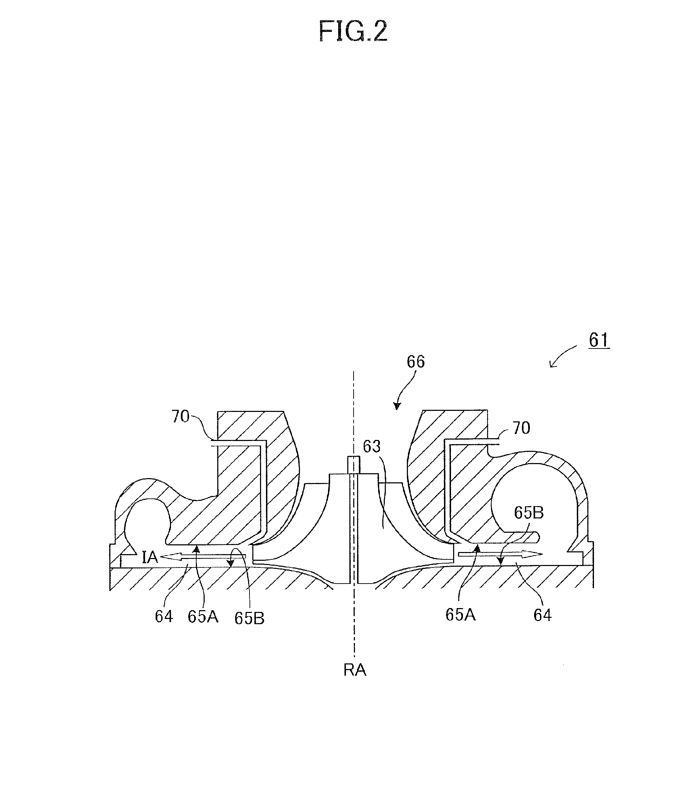

A first embodiment will be described. The internal combustion engine according to the first embodiment is shown in FIG. 1. A compressor of a turbocharger according to the first embodiment is shown in FIG. 2. The internal combustion engine (hereinafter, will be referred to as "engine") 10 has an engine body 20, an intake passage 30 and an exhaust passage 40. The engine body 20 has a crank case 21, an oil pan 22, a cylinder block 23 and a cylinder head 24. The crank case 21 supports a crank shaft 21A rotatably. The oil pan 22 is secured to the crank case 21 at a lower side of the crank case 21. The oil pan 22 and the crank case 21 define a space (hereinafter, will be referred to as "crank case chamber") for housing the crank shaft 21A and reserving a luburication oil OL therein.

The cylinder block 23 is secured to the crank case 21 at an upper side of the crank case 21. The cylinder block 23 is made of aluminum. Further, the cylinder block 23 has cylinder bores 23A (in the first embodiment, four cylinder bores) each having a hollow cylindrical shape. A cast-iron cylinder liner 23B is inserted in the respective cylinder bore 23A such that the liner 23B is contact with an inner peripheral wall surface defining the cylinder bore 23A. Further, a piston 23C is housed in the respective cylinder bore 23A (in particular, in the respective cylinder liner 23B in the first embodiment).

The piston 23C has a generally cylindrical shape. Further, piston rings are provided on a side wall surface of the respective piston 23C. The lowermost one of the piston rings (that is, the piston ring at the side of the crank case 21) is a so-called oil ring OR. The oil ring OR slides on the inner peripheral wall surface defining the cylinder bore 23A (in particular, the inner peripheral wall surface of the cylinder liner 23B in the first embodiment), thereby to scrape, toward the crank case 21 side, the lubrication oil (in other words, an oil film) adhered to the inner peripheral wall surface defining the cylinder bore 23A. The piston 23C is connected to the crank shaft 21A by a connecting rod 23D. An upper wall surface (that is, a top wall surface) of the piston 23C defines a combustion chamber CC together with the inner peripheral wall surface of the cylinder liner 23B and a lower wall surface of the cylinder head 24.

The cylinder head 24 is mounted on the cylinder block 23 at the upper side of the cylinder block 23. Intake ports and exhaust ports are formed in the cylinder head 24. The respective intake port is in communication with the combustion chamber CC and the respective exhaust port is communication with the combustion chamber CC. The respective intake port is opened and closed by a respective intake valve. The intake valve is driven by a cam (not shown) of an intake cam shaft (not shown) housed in the cylinder head 24. The respective exhaust port is opened and closed by a respective exhaust valve. The exhaust valve is driven by a cam (not shown) of an exhaust cam shaft (not shown) housed in the cylinder head 24. The cylinder head 24 is covered by a cylinder head cover 24A. Fuel injectors (not shown) are provided on the cylinder head 24.

The intake passage 30 is generally defined by an intake pipe 31, an intercooler 32, a compressor 61 of a turbocharger 60 and the intake ports. The intake pipe 31 is connected to the intake ports. The compressor 61 is interposed in the intake pipe 31. The intercooler 32 is interposed in the intake pipe 31 downstream of the compressor 61.

The exhaust passage 40 is generally defined by the exhaust ports, an exhaust pipe 41 and a turbine 62 of the turbocharger 60. The exhaust pipe 41 is connected to the exhaust ports. The turbine 62 is interposed in the exhaust pipe 41. The turbine 62 is connected to an impeller 63 of the compressor 61 by a shaft.

The turbine 62 is rotated by energy of an exhaust gas flowing through the turbine 62. The rotation of the turbine 62 is transmitted to the impeller 63 via the shaft. Thereby, the impeller 63 is rotated. The rotation of the impeller 63 compresses an intake air. In other words, the turbocharger 60 supercharges the intake air.

The turbocharger 60 is a centrifugal type of the turbocharger. In other word, the compressor 61 introduces the intake air thereinto from an intake air inlet 66 in a direction along a rotation axis RA of the impeller 63, compresses the introduced intake air by the rotation of the impeller 63 and discharges the compressed intake air from the impeller 63 radially outwardly. The turbocharger 60 includes an annular diffuser passage 64. The intake air discharged from the impeller 63 flows into the diffuser passage 64. The diffuser passage 64 is generally defined by two diffuser wall surfaces 65A and 65B. One 65A of the diffuser wall surfaces 65A and 65B locates at the side of the intake air inlet 66 with respect to a reference plane which extends at a center area of the diffuser passage 64 perpendicularly to the rotation axis RA of the impeller 63. The other diffuser wall surface 65B locates at the opposed side of the diffuser wall surface 65A with respect to the reference plane.

A blowby gas recirculation device 50 according to the first embodiment has a first passage 51, a second passage 52 and a third passage 53. The first passage 51 is formed in the cylinder block 23. The first passage 51 connects the crank case chamber to the second passage 52 formed in the cylinder head 24. The second passage 52 extends in the cylinder head 24 along a predetermined route and is connected to one end of the third passage 53. The third passage 53 is defined by a gas pipe 53A provided outside of the engine body 20. The other end of the third passage 53 is connected to the intake pipe 31 upstream of the compressor 61.

A blowby gas leaking from the combustion chamber CC into the crank case chamber is recirculated to the intake passage 30 through the first, second and third passages 51, 52 and 53. Note that a well-known PCV valve may be provided in the third passage 53 for controlling an amount of the blowby gas recirculated to the intake passage 30.

### <Cooling Device for Turbocharger accoridng to First Embodiment>

A cooling device for the turbocharger according to the first embodiment will be described. The cooling device according to the first embodiment includes a cooled air introduction device. The cooled air introduction device has a cooled air introduction passage 70. The cooled air introduction passage 70 connects the intake passage 30 downstream of the intercoolier 32 to the diffuser passage 64 formed in the compressor 61. The cooled air introduction device 70 opens at the diffuser wall surface 65A. A part of the cooled air discharged from the intercooler 32 (that is, the intake air cooled by the intercooler) is introduced to the diffuser passage 64 through the cooled air introduction passage 70. The cooled air introduction passage 70 is configured to introduce the cooled air to the diffuser passage 64 in a direction having an acute angle with respect to an intake air flow direction (that is, a flow direction of the intake air in the diffuser passage 64) IA. In other words, the cooled air introduction passage 70 extends at an area adjacent to the diffuser wall surface 65A in a direction having an acute angle with respect to the intake air flow direction IA.

### <Effect derived from First Embodiment>

According to the first embodiment, the cooled air is introduced from the cooled air introduction passage 70 to the diffuser passage 64. Therefore, the intake air discharged from the impeller 63 is cooled by the cooled air. Thereby, an oil mist included in the intake air can be prevented from being subject to a high temperature. Thus, the generation of the deposits from the oil mist included in the intake air can be suppressed.

In addition, according to the first embodiment, the cooled air is introduced to the diffuser passage 64 in the direction having the acute angle with respect to the intake air flow direction IA. Therefore, a layer of the cooled air is formed between the intake air discharged from the impeller 63 and the diffuser wall surface 65A. Thereby, an amount of the heat which the intake air receives from the diffuser wall surface 65A, can be reduced. Therefore, the increasing of a discharging temperature (that is, a temperature of a gas discharged from the impeller 63 and in the first embodiment, a temperature of the intake air discharged from the impeller 63) can be suppressed. Thus, the generation of the deposits from the oil mist included in the intake air can be suppressed.

In addition, according to the first embodiment, the layer of the cooled air is formed between the intake air and the diffuser wall surface 65A and thus, even when the deposits are generated from the oil mist included in the intake air, the accumulation of the deposits on the diffuser wall surface 65A can be suppressed by the layer of the cooled air.

In addition, according to the first embodiment, the cooled air is introduced from the cooled air introduction passage 70 to the diffuser passage 64 generally along the intake air flow direction IA. Therefore, the generation of the disturbance of the flow of the intake air due to the introduction of the cooled air to the diffuser passage 64 can be suppressed. Thus, the decreasing of a supercharging efficiency of the turbocharger 60 due to the introduction of the cooled air to the diffuser passage 64 can be suppressed.

Note that in the first embodiment, a gas other than the cooled air may be used as an introduced gas (that is, a gas to be introduced to the diffuser passage 64). The introduced gas including the cooled air is preferably at least a gas having a low temperature to the extent that the gas can lower the temperature of the diffuser wall surface 65A. In the other words, the temperature of the introduced gas including the cooled air is preferably lower than the temperature of the diffuser wall surface 65A. In addition, the temperature of the introduced gas including the cooled air is preferably at least lower than the temperature of the intake air discharged from the impeller of the compressor to the diffuser passage.

Although in the first embodiment, the angle between the direction of the extension of the cooled air introduction passage 70 and the intake air flow direction IA is not limited to any particular angle, the angle is preferably such an angle that the desired layer of the cooled air can be formed on the diffuser wall surface 65A or such an angle that the generation of the disturbance of the intake air flowing in the diffuser passage 64 can be desirably suppressed, more preferably, an angle generally corresponding to zero.

Further, although in the first embodiment, the position where the cooled air is introduced to the diffuser passage 64, is not limited to any particular position, the position where the cooled air is introduced to the diffuser passage 64, is preferably a position adjacent to an intake air discharging area (that is, an area where the intake air is discharged from the impeller 63).

Further, in the first embodiment, the cooled air introduction passage 70 may opens at the diffuser wall surface 65A as well as the diffuser wall surface 65B. Furthermore, in the first embodiment, the cooled air introduction passage 70 may only opens at the diffuser wall surface 65B without opening at the diffuser wall surface 65A.

### <Second Embodiment>

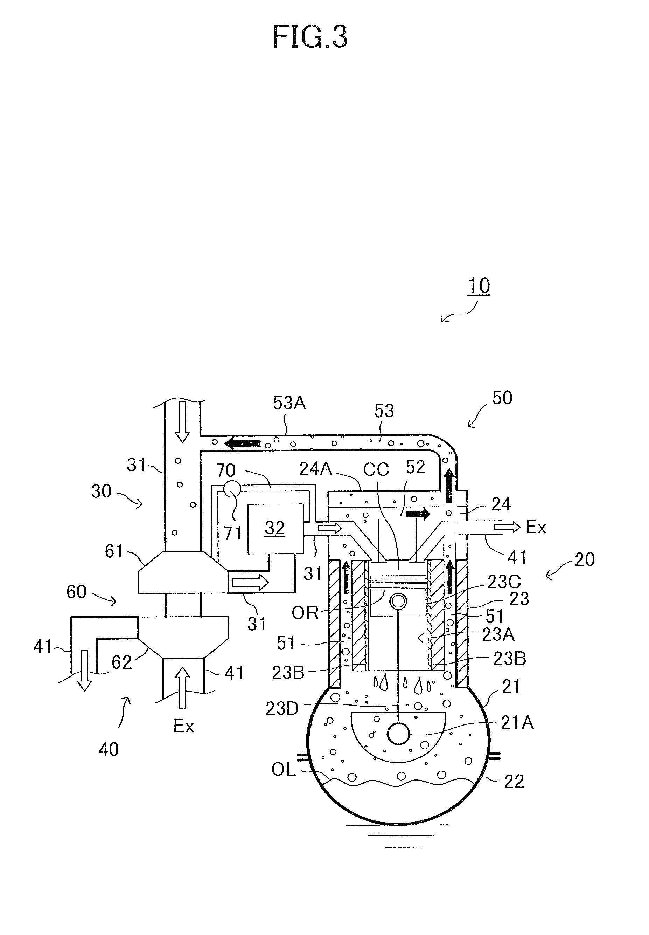

A second embodiment will be described. The engine according to the second embodiment is shown in FIG. 3. The second embodiment is different from the first embodiment on the point that the cooled air introduction device has a flow rate control valve. The other components of the second embodiment are the same as the components of the first embodiment, respectively.

A flow rate control valve 71 is positioned in the cooled air introduction passage 70. The flow rate control valve 71 can control an amount of the cooled air to be introduced from the cooled air introduction passage 70 to the diffuser passage 64. In the second embodiment, an opening degree of the flow rate control valve 71 is determined, depending on the discharging temperature. In particular, as the discharging temperature increases, the opening degree of the flow rate control valve 71 is increased. Note that an introduced cooled air amount (that is, an amount of the cooled air introduced from the cooled air introduction passage 70 to the diffuser passage 64) increases as the opening degree of the flow rate control valve 71 is increased.

### <Effect derived from Second Embodiment>

According to the second embodiment, the introduced cooled air amount depends on the discharging temperature and thus, the generation of the deposits can be certainly suppressed.

Note that the discharging temperature changes, depending on an intake amount (that is, an amount of the air suctioned into the combustion chamber CC) and a supercharging pressure (that is, a pressure of a gas compressed by the compressor 61, that is, a pressure in the intake passage 30 downstream of the compressor 61). In particular, as the intake amount increases, the discharging temperature tends to increase and as the supercharging pressure increases, the discharging temperature tends to increase. Accordingly, in the second embodiment, the intake air amount or the supercharging pressure or the combination of the intake air amount and the supercharging pressure may be used as a parameter representing the discharging temperature. When the intake air amount is used, the opening degree of the flow rate control valve 71 is increased as the intake air amount increases. When the supercharging pressure is used, the opening degree of the flow rate control valve 71 is increased as the supercharging pressure increases. When the combination of the intake air amount and the supercharging pressure is used, the opening degree of the flow rate control valve 71 is increased as the intake air amount increases while the opening degree of the flow rate control valve 71 is increased as the supercharging pressure increases.

### <Flow for Controlling Flow Rate Control Valve according to Second Embodiment>

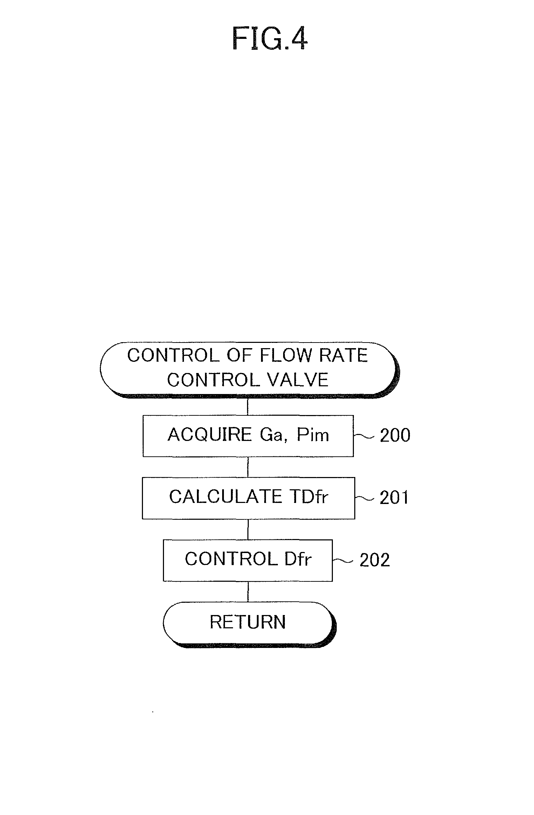

A flow for controlling the flow rate control valve according to the second embodiment will be described. An example of this flow is shown in FIG. 4. When the flow shown in FIG. 4 starts, first, at the step 200, the intake air amount Ga and the supercharging pressure Pim are acquired. Next, at the step 201, a target opening degree TDfr of the flow rate control valve 71 is calculated on the basis of the intake air amount Ga and the intake air pressure Pim acquired at the step 200. Next, at the step 202, the opening degree Dfr of the flow rate control vavle 71 is controlled to the target opening degree TDfr calculated at the step 201 and then, this flow is ended.

### <Third Embodiment>

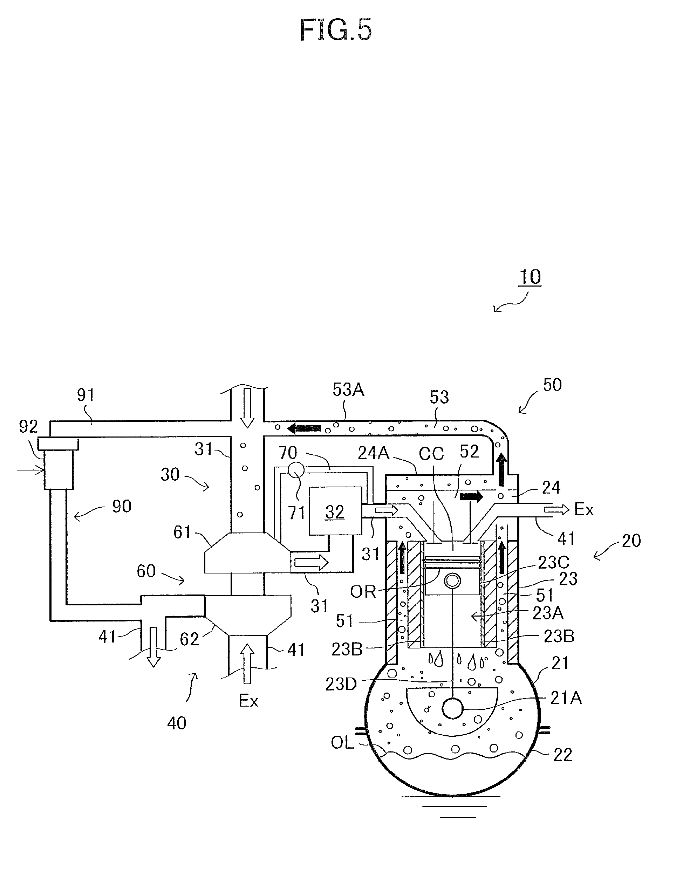

A third embodiment will be described. The engine according to the third embodiment is shown in FIG. 5. The third embodiment is different from the second embodiment on the point that the engine has an exhaust gas recirculation device. The other components of the third embodiment are the same as the components of the second embodiment, respectively.

An exhaust gas recirculation device (hereinafter, will be referred to as "EGR device") 90 serves to introduce an exhaust gas to the intake passage 30. The EGR device 90 has an exhaust gas recirculation passage (hereinafter, will be referred to as "EGR passage") 91 and an exhaust gas recirculation control valve (hereinafter, will be referred to as "EGR valve") 92. The EGR passage 91 connects the exhaust passage 40 downstream of the turbin 62 directly to the intake passage 30 upstream of the compressor 61. The EGR valve 92 is positioned in the EGR passage 91. The EGR valve 92 can control a flow rate of an exhaust gas flowing through the EGR passage 91. When the EGR valve 92 is opened during the operation of the engine, the exhaust gas is introduced to the intake passage 30 through the EGR passage 91. Further, as an opening degree of the EGR valve 92 is increased, an EGR gas amount (that is, an amount of the exhaust gas introduced to the intake passage 30) increases.

A EGR execution condition (that is, an engine operation condition for executing the introduction of the exhaust gas to the intake passage 30 by the EGR device 90) is previously determined. When the state of the operation of the engine satisfies the EGR execution condition, the EGR valve 92 is opened to thereby execute an EGR (that is, the introduction of the exhaust gas to the intake passage 30 by the EGR device 90).

In addition, the opening degree of the EGR valve 92 during the execution of the EGR is previously determined, depending on the state of the operation of the engine. During the execution of the EGR, the opening degree of the EGR valve 92 is controlled to an opening degree determined, depending on the state of the operation of the engine.

Further, similar to the second embodiment, the opening degree of the flow rate control valve 71 is determined, depending on the discharging temperature (that is, the temperature of the gas discharged from the impeller 63).

### <Effect derived from Third Embodiment>

According to the third embodiment, the introduced cooled air amount depends on the discharging temperature and thus, the generation of the deposits can be certainly suppressed during the execution of the EGR.

Note that the discharging temperature changes, depending on the intake air amount, the supercharging pressure and the EGR gas amount. In particular, as the intake air amount increases, the discharging temperature tends to increase. As the supercharging pressure increases, the discharging temperature tends to increase. As the EGR gas amount decreases, the discharging temperature tends to increase. Accordingly, in the third embodiment, the intake air amount or the supercharging pressure or the EGR gas amount or the combination of at least two of the intake air amount, the supercharging pressure and the EGR gas amount may be used as a parameter representing the discharging temperature. When the intake amount is used, the opening degree of the flow rate control valve 71 is increased as the intake air amount increases. When the supercharging pressure is used, the opening degree of the flow rate control valve 71 is increased as the supercharging pressure increases. When the EGR gas amount is used, the opening degree of the flow rate control valve 71 is increased as the EGR gas amount decreases. When the combination of two or all of the intake air amount, the supercharging pressure and the EGR gas amount is used, as the intake air amount increases, the opening degree of the flow rate control valve 71 is increased, as the supercharging pressure increases, the opening degree of the flow rate control valve 71 is increased and as the EGR gas amount decreases, the opening degree of the flow rate control valve 71 is increased.

Note that in place of the EGR gas amount, the opening degree of the EGR valve 72 may be used as a parameter representing the discharging temperature.

### <Flow for Controlling Flow Rate Control Valve according to Third Embodiment>

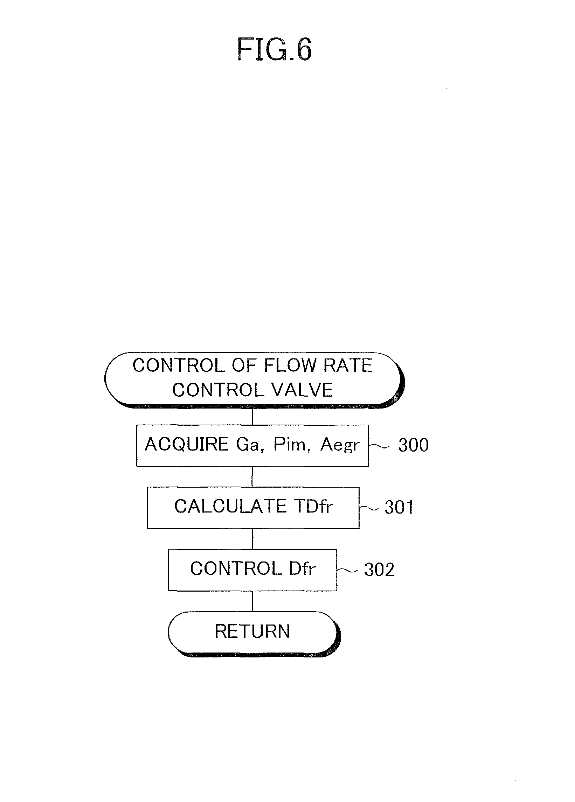

A flow for controlling the flow rate control valve according to the third embodiment will be described. An example of this flow is shown in FIG. 6. When the flow shown in FIG. 6 starts, first, at the step 300, the intake air amount Ga, the supercharging pressure Pim and the EGR gas amount Aegr are acquired. Next, at the step 301, a target opening degree TDfr of the flow rate control valve 71 is calculated on the intake air amount Ga, the intake air pressure Pim and the EGR gas amount Aegr acquired at the step 300. Next, at the step 302, the opening degree Dfr of the flow rate control valve 71 is controlled to the target opening degree TDfr calculated at the step 301 and then, this flow is ended.

Note that the embodiments described above may be combined without departing from the scope of the invention.

## Claims

1. A cooling device for a turbocharger of an internal combustion engine provided with a blowby gas recirculation device, wherein the cooling device comprises low temperature gas introduction means,
the blowby gas recirculation device is configured to introduce a blowby gas to an area upstream of a compressor of the turbocharger,
the low temperature gas introduction means is configured to introduce a low temperature gas to a diffuser passage of the compressor,
the low temperature gas has a temperature lower than a temperature of an intake air discharged from an impeller of the compressor to the diffuser passage, and
the low temperature gas introduction means is configured to introduce the low temperature gas to the diffuser passage in a direction having an acute angle with respect to a flow direction of the intake air flowing through the diffuser passage.

2. The cooling device for the turbocharger of the engine as set forth in claim 1, wherein the low temperature gas introduction means includes a low temperature gas introduction passage, and
the low temperature gas introduction passage opens to the diffuser passage at a diffuser wall surface defining the diffuser passage and extends at an area adjacent to the diffuser wall surface in the direction having the acute angle with respect to the flow direction of the intake air flowing through the diffuser passage.

3. The cooling device for the turbocharger of the engine as set forth in claim 1 or 2, wherein the low temperature gas introduction means is configured to introduce the low temperature gas to the diffuser passage at an area adjacent to an area where the intake air is discharged from the impeller of the compressor.

4. The cooling device for the turbocharger of the engine as set forth in any of claims 1 to 3, wherein the low temperature gas introduction means is configured to introduce the intake air cooled by an intercooler to the diffuser passage as the low temperature gas.
